# EUROPÄISCHE PATENTSCHRIFT

(11) **EP 2 468 436 B1**
(45) Veröffentlichungstag und Bekanntmachung des Hinweises auf die Patenterteilung: **03.04.2013**
(21) Anmeldenummer: 10195507.8
(22) Anmeldetag: 16.12.2010
(51) Int. Cl.: B22F 3/10, B22F 5/08, B22F 3/22, B22F 3/16

(54) **Verfahren zur Herstellung von Metallformkörpern mit strukturierter Oberfläche**
Method for manufacturing metal casings with structured surfaces
Procédé de fabrication de corps de formage métalliques dotés d'une surface structurée

(43) Veröffentlichungstag der Anmeldung: 27.06.2012
(73) Patentinhaber: Helmholtz-Zentrum Geesthacht Zentrum für Material- und Küstenforschung GmbH, 21502 Geesthacht (DE)
(72) Erfinder: Milagres Ferri, Orley, 34292 Ahnatal (DE); Ebel, Thomas, 21447, Handorf (DE); de Traglia Amancio Filho, Sergio, 21039, Börnsen (DE); Fernandez dos Santos, Jorge, 21395, Tespe (DE)
(74) Vertreter: UEXKÜLL & STOLBERG

(56) Entgegenhaltungen:
- EP-A2- 0 468 467
- US-A1- 2002 098 105
- US-B1- 6 350 407

## Beschreibung

### HINTERGRUND DER ERFINDUNG

Die vorliegende Erfindung betrifft ein Verfahren zur Herstellung von Metallformkörpern mit strukturierter Oberfläche.

Für die Verbindung von Bauteilen aus faserverstärktem Kunststoff mittels neuer Verbindungstechnologien wie dem in der EP-Anmeldung 09015014.5 beschriebenen "*Friction Spot Joining*" werden metallische Verbinder benötigt, die mindestens eine, vorzugsweise zwei strukturierte Oberflächen im Submillimeterbereich aufweisen und eine Verankerung mit dem Kunststoff bewirken sollen. Im Flugzeugbau sind derartige Metallverbinder beispielsweise etwa 1 mm dicke Bleche mit ankerförmigen Strukturen im Submillimeterbereich auf beiden Seiten der Obefläche.

Im Flugzeugbau werden auf Grund der vorteilhaften Korrosionseigenschaften Titanlegierungen wie TiAl6V4 und auf Grund des hohen Verhältnisses von Festigkeit zu Dichte im Automobilbau Magnesiumlegierungen verwendet. Metallverbinder aus diesen Legierungen, die eine hakenförmige Oberflächenstruktur im Bereich von unter 1 mm aufweisen, sind aber mit herkömmlichen Verfahren nicht oder nur sehr schwer herstellbar. Da die gewünschten metallischen Verbinder eine Neuentwicklung sind, sind bislang auch keine Verfahren zu deren Herstellung aus dem Stand der Technik bekannt. Versuche, eine geeignete Struktur mittels elektrolytischer Abscheidung herzustellen, führten zu Metallformkörpern mit ungenügenden mechanischen Eigenschaften. Spanende Herstellung oder Gießen der metallischen Verbinder ist nur mit sehr hohem Aufwand möglich.

Die US 2002/098105 A1 offenbart ein Verfahren zur Herstellung komplexer Formgedächtnislegierungsmaterialien. Bei dem Verfahren wird eine Teilchenform einer Formgedächtnislegierung erzeugt, die Teilchen mit einem Bindemittel kombiniert, gegossen, erwärmt (einschließlich Entbindern und Sintern) und thermo-mechanisch aufbereitet.

Die US 6 350 407 B1 beschreibt ein Verfahren zur Herstellung eines gesinterten Kompaktmaterials mittels MIM-Technologie.

Die EP 0 468 467 A2 offenbart ein Verfahren zur Herstellung eines Präzisionsmetallwerkstücks aus einem gesinterten Rohling durch Pulverformen.

### ZUSAMMENFASSSUNG DER ERFINDUNG

Aufgabe der Erfindung ist es daher ein wirtschaftliches Verfahren zur Herstellung von Metallformkörpern mit strukturierter Oberfläche, insbesondere Metallformkörpern mit mindestens einer, einen Verankerungsabschnitt mit einem am zum Metallkörper weisenden Ende ausgebildeten Hinterschnitt aufweisenden strukturierten Oberfläche bereitzustellen, wobei die Strukturen auf der Oberfläche eine Länge von unter 1 mm aufweisen können. Ein "*Verankerungsabschnitt*" mit einem am zum Metallkörper weisenden Ende ausgebildeten Hinterschnitt, bedeutet im vorliegenden Zusammenhang jegliche Struktur, bei der sich wenigstens eine Abmessung des Vorsprungs senkrecht zu dessen Erstreckungsrichtung vom Metallformköper weg sprunghaft vergrößert. Ein Verankerungsabschnitt im Zusammenhang der vorliegenden Erfindung kann beispielsweise eine Winkelform, eine Hakenform, eine Ankerform, eine Pilzform, etc. aufweisen.

Die oben genannte Aufgabe wird durch ein Verfahren zur Herstellung von Metallformkörpern mit strukturierter Oberfläche gelöst, bei dem
(a) Metallpulver und/oder Metalllegierungspulver mit einem Bindemittel und gegebenenfalls einem Zuschlagstoff in einem Kneter vermischt werden,
(b) die Mischung durch Spritzgießen zu einem Grünteil mit mindestens einem strukturierten Oberflächenabschnitt geformt wird, wobei der strukturierten Oberflächenabschnitt Vorsprünge aufweist,
(c) die mit Vorsprüngen strukturierte Oberfläche des Grünteils so verformt wird, dass die Vorsprünge an ihrem vom Grünteil abgewandten Ende einen Verankerungsabschnitt aufweisen, an dessen zum Grünteil weisenden Ende ein Hinterschnitt ausgebildet ist,
(d) das so erhaltene strukturierte Grünteil chemisch zu einem strukturierten Braunteil entbindert wird,
(e) das chemisch entbinderte, strukturierte Braunteil thermisch entbindert wird,
(f) das chemisch und thermisch entbinderte strukturierte Braunteil zur Bildung eines Metallformkörpers mit strukturierter Oberfläche gesintert wird.

Die Aufgabe wird auch durch ein Verfahren zur Herstellung von Metallformkörpern mit strukturierter Oberfläche gelöst, bei dem
(a) Metallpulver und/oder Metalllegierungspulver mit einem Bindemittel und gegebenenfalls einem Zuschlagstoff in einem Kneter vermischt werden,
(b) die Mischung durch Spritzgießen zu einem Grünteil mit mindestens einer strukturierten Oberfläche geformt wird, wobei die strukturierte Oberfläche Vorsprünge aufweist,
(c) das mit Vorsprüngen strukturierte Grünteil chemisch zu einem mit Vorsprüngen strukturiertem Braunteil entbindert wird,
(d) die mit Vorsprüngen strukturierte Oberfläche des Braunteils so verformt wird, dass die Vorsprünge an ihrem vom Braunteil abgewandten Ende einen Verankerungsabschnitt aufweisen, an dessen zum Braunteil weisenden Ende ein Hinterschnitt ausgebildet ist,
(e) das so erhaltene strukturierte Braunteil thermisch entbindert wird,
(f) das chemisch und thermisch entbinderte strukturierte Braunteil zur Bildung eines Metallformkörpers mit strukturierter Oberfläche gesintert wird.

Das Erfindungsgemäße Verfahren nutzt das Metallpulver-Spritzgießverfahren ("*Metal Injection Moulding*", MIM) zur Herstellung einer strukturierten ersten Vorläuferform des Metallformkörpers und eine endformgebende Nachbehandlung. Die erste Vorläuferform des Metallformkörpers umfasst vorzugsweise ein Blech, das vorzugsweise etwa 3 bis 6 cm, bevorzugter etwa 4 cm lang, und etwa 1 bis 3 cm, bevorzugter etwa 2 cm breit ist, wobei die Oberflächenstruktur der ersten Vorläuferform des Metallformkörpers Vorsprünge aufweist, die vorzugsweise eine Säulenstruktur oder eine Kegelstruktur haben. Die Säulenstruktur oder die Kegelstruktur kann eine runde oder eine polygonale Basis aufweisen. Vorzugsweise weist die Säulenstruktur eine runde Basis unter Ausbildung einer Zylinderform auf.

Diese Oberflächenstruktur der ersten Vorläuferform des Metallformkörpers wird im weiteren Verlauf des erfindungsgemäßen Verfahrens in eine Struktur einer weiteren Vorläuferform des Metallformkörpers umgewandelt, so dass die Vorsprünge an ihrem vom Metallformkörper abgewandten Ende einen Verankerungsabschnitt aufweisen, an dessen Ende, das zur weiteren Vorläuferform des Metallformkörpers weist, ein Hinterschnitt ausgebildet ist. Der Verankerungsabschnitt hat vorzugsweise eine Pilzform oder eine pilzähnliche Form.

Bei dem erfindungsgemäßen Verfahren wird ausgenutzt, dass das der Formkörper der ersten Vorläuferform des Metallformkörpers aus Metallpulver oder Metalllegierungspulver und Bindemittel unter Erwärmung verformbar ist. Vorzugsweise wird die mit Vorsprüngen strukturierte Oberfläche der ersten Vorläuferform des Metallformkörpers zu einer weiteren Vorläuferform des Metallformkörpers verformt, indem der Formkörper der ersten Vorläuferform des Metallformkörpers in eine temperierte Matrize gepresst wird. Die Matrize hat vorzugsweise halbkugelförmige Vertiefungen. Die Umformung der ersten Vorläuferform des Metallformkörpers kann im Grünteilzustand, d.h. nach dem Spritzgießen (siehe Patentanspruch 1), oder im Braunteilzustand, d.h. nach der chemischen Entbinderung (siehe Patentanspruch 2), stattfinden. Die Umformung im Braunteilzustand ist bevorzugt, da durch die chemische Entbinderung kein Wachsanteil im noch verbleibenden Bindemittel vorhanden ist. Besonders bevorzugt findet die Umformung dadurch statt, dass nur die Spitzen der Vorsprünge der nach dem Spritzgießen und gegebenenfalls chemischen Entbindern erhaltenen ersten Vorläuferform des Metallformkörpers erwärmt und verformt werden.

Nach der Umformung wird die weitere Vorläuferform des Metallformkörpers thermisch entbindert und zur Bildung eines Metallformkörpers mit strukturierter Oberfläche gesintert, wie es beispielsweise in der Deutschen Patentanmeldung DE 10 2006 049 844 beschrieben ist.

### DETAILLIERTE BESCHREIBUNG DER ERFINDUNG

Bevorzugt wird als Metalllegierungspulver eine Titanlegierung und/oder eine Magnesiumlegierung verwendet. Besonders bevorzugt werden Titanlegierungen verwendet, die Aluminium und/oder Vanadium als zusätzliche Bestandteile enthalten. Diese zusätzlichen Legierungsbestandteile wie Aluminium und/oder Vanadium sind jeweils vorzugsweise in einer Menge von 2 bis 10 Gew.-% auf Basis des Gesamtgewichts der Legierung enthalten. Am meisten bevorzugt ist eine TiA16V4-Legierung, die etwa 6 Gew.% Aluminium, etwa 4 Gew.% Vanadium und Titan als Rest enthält.

Die Teilchengröße (maximale Teilchengröße, ermittelt durch Sieben) des Metalllegierungspulvers beträgt vorzugsweise weniger als 50 µm, bevorzugter weniger als 45 µm, am meisten bevorzugt weniger als 25 µm.

Das Bindemittel ist vorzugsweise ausgewählt aus der Gruppe bestehend aus: Polyamiden, Polyoxymethylen, Polycarbonat, Styrol-Acrylnitril-Copolymerisat, Polyimid, natürlichen Wachsen und Ölen, Duroplasten, Cyanaten, Polypropylen, Polyacetat, Polyethylen, Ethylen-Vinylacetat, Polyvinylalkohol, Polyvinylchlorid, Polystyrol, Polymethylmethacylat, Anilinen, Mineralölen, Wasser, Agar, Glycerin, Polyvinylbutyryl, Polybutylmethacrylat, Cellulose, Ölsäure, Phtalaten, Paraffinwachsen, Carnaubwachs, Ammoniumpolyacrylat, Digylceridstearat und - oleat, Glycerylmonostearat, Isopropyltitanat, Lithiumstearat, Monoglyceriden, Formaldehyd, Octylsäurephosphat, Olefinsulfonaten, Phosphatestern, Stearinsäure und Mischungen derselben. Vorzugsweise werden mindestens zwei Bindemittel verwendet, am meisten bevorzugt ist das Bindemittel aus Paraffinwachs, Polyethylenwachs und Stearinsäure zusammengesetzt. Der Volumenanteil des Bindemittels ist vorzugsweise kleiner als 60%, bevorzugter 20 bis 50%.

Als Zuschlagstoff wird bevorzugt Borpulver verwendet. Alternativ können auch Carbonfasern oder Glasfasern als Zuschlagstoffe, insbesondere in Magnesiumlegierungen, verwendet werden.

Die Vermischung im Kneter erfolgt vorzugsweise bei einer Temperatur von 50 bis 250°C, besonders bevorzugt 90 bis 150°C.

Auch das Spritzgießen erfolgt vorzugsweise bei einer Massetemperatur von 50 bis 250°C, besonders bevorzugt 90 bis 150°C und vorzugsweise bei einem Druck von 400 bis 800 bar.

Die chemische Entbinderung erfolgt bevorzugt in einem Kohlenwasserstoffbad wie z.B. aliphatischem Kohlenwasserstoffbad, vorzugsweise in einem Pentanbad, einem Hexanbad oder einem Heptanbad. Besonders bevorzugt erfolgt die chemische Entbinderung in einem Hexanbad. Die chemische Entbinderung erfolgt bei einer Temperatur von vorzugsweise 10 bis 65°C, bevorzugter von 30 bis 50°C.

Die thermische Entbinderung erfolgt bei einer Temperatur von weniger als 450°C, bevorzugt 200 bis 350°C und vorzugsweise im Vakuum bei einem Druck von vorzugsweise 2 bis 20 mbar.

Die Sinterung erfolgt vorzugsweise bei 80 bis 90% der Schmelztemperatur des Metalls bzw. der Metalllegierung und bevorzugter in einer Schutzgasatmosphäre. Vorzugsweise ist das Schutzgas Argon. Alternativ kann die Sinterung auch im Vakuum erfolgen. In diesem Fall beträgt der Druck vorzugsweise 10⁻³ bis 10⁻⁵ mbar (absolut). Die thermische Entbinderung und die Sinterung kann vorteilhaft im selben Ofen stattfinden. Dabei werden vorzugsweise geeignete Temperaturprogramme verwendet. Bei der thermischen Entbinderung und/oder bei der Sinterung wird vorzugsweise zur Minimierung der Sauerstoffaufnahme durch die Braunteile sauerstoffbindendes Material wie Titanpulver oder Magnesiumpulver im Ofen platziert.

Vorzugsweise werden die erfindungsgemäßen Verfahren so durchgeführt, dass die Sauerstoffaufnahme durch den Werkstoff weiniger als 0,3 Gew.% beträgt. Ein Sauerstoffgehalt oberhalb von etwa 0,3 Gew.% im gesinterten Metallformkörper kann zur Versprödung des Metallformkörpers führen.

Der gesinterte Metallformkörper kann gegebenenfalls mit einem Laser nachbehandelt werden. Vorzugsweise findet die Lasernachbehandlung unter einer Schutzgasatmosphäre, beispielsweise unter einer Argonatmosphäre oder einer Heliumatmosphäre statt.

Die Erfindung wird anhand der nachfolgenden Figuren beispielhaft erläutert, in denen:
**Fig. 1** eine schematische Querschnittsansicht einer ersten strukturierten ersten Vorläuferform des strukturierten Metallformkörpers darstellt,
**Fig. 2** eine schematische Querschnittsansicht einer ersten strukturierten weiteren Vorläuferform des Metallformkörpers darstellt,
**Fig. 3** eine schematische Querschnittsansicht einer zweiten strukturierten ersten Vorläuferform des strukturierten Metallformkörpers darstellt,
**Fig. 4** eine schematische Querschnittsansicht einer zweiten strukturierten weiteren Vorläuferform des Metallformkörpers darstellt und
**Fig. 5** eine schematische Querschnittsansicht eines ersten strukturierten Metallformkörpers als Verbindungselement zwischen zwei Kunststoff- oder CFK-Bauteilen darstellt.

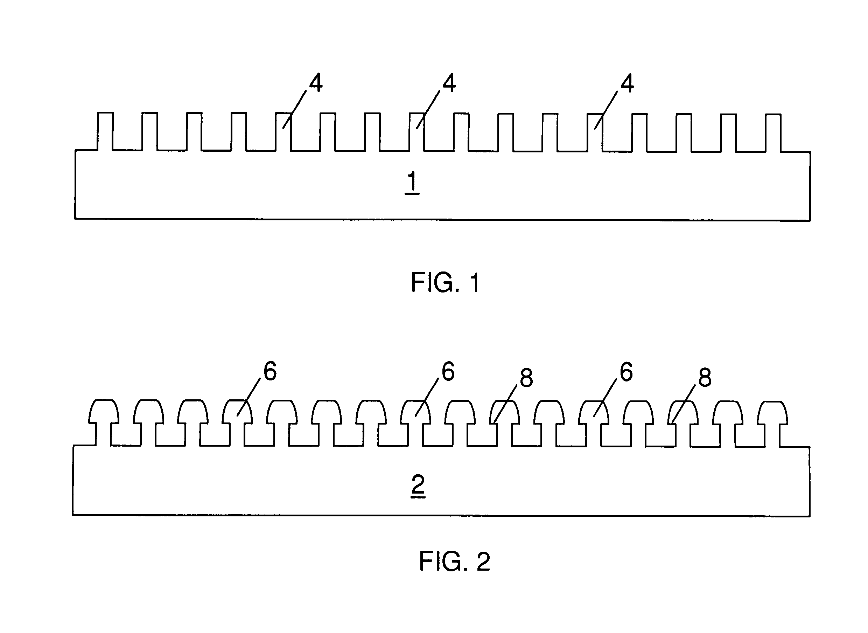

**Fig. 1** zeigt eine erste strukturierte erste Vorläuferform **1** des strukturierten Metallformkörpers nach dem Spritzgießen, vor der Umformung zu einer weiteren Vorläuferform des strukturierten Metallformkörpers. Die erste Vorläuferform **1** des Metallformkörpers umfasst vorzugsweise ein Blech, das vorzugsweise etwa 3 bis 6 cm, bevorzugter etwa 4 cm lang, und etwa 1 bis 3 cm, bevorzugter etwa 2 cm breit ist, wobei die Oberflächenstruktur der ersten Vorläuferform Vorsprünge **4** aufweist. Die Vorsprünge **4** weisen vorzugsweise eine Säulenstruktur oder eine Kegelstruktur (nicht gezeigt) auf. Die Säulenstruktur oder die Kegelstruktur kann eine runde oder eine polygonale Basis aufweisen. Vorzugsweise weist die Säulenstruktur eine runde Basis unter Ausbildung einer Zylinderform auf.

Diese Oberflächenstruktur der ersten Vorläuferform **1** des Metallformkörpers wird im weiteren Verlauf des erfindungsgemäßen Verfahrens in eine Struktur einer weiteren Vorläuferform **2** (siehe **Fig. 2**) des Metallformkörpers umgewandelt, so dass die Vorsprünge **6** an ihrem vom Metallformkörper abgewandten Ende einen Verankerungsabschnitt aufweisen, an dessen Ende, das zur weiteren Vorläuferform des Metallformkörpers weist, ein Hinterschnitt **8** ausgebildet ist. Der Verankerungsabschnitt hat wie abgebildet vorzugsweise eine Pilzform oder eine pilzähnliche Form.

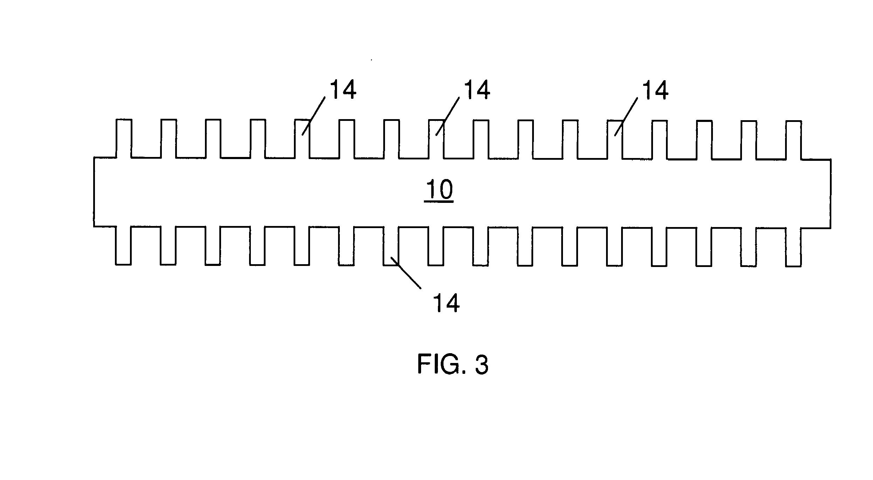

**Fig. 3** zeigt eine zweite strukturierte erste Vorläuferform **10** des strukturierten Metallformkörpers nach dem Spritzgießen, vor der Umformung zu einer weiteren Vorläuferform des strukturierten Metallformkörpers. Die erste Vorläuferform **10** des Metallformkörpers umfasst vorzugsweise ein Blech, das vorzugsweise etwa 3 bis 6 cm, bevorzugter etwa 4 cm lang, und etwa 1 bis 3 cm, bevorzugter etwa 2 cm breit ist, wobei die Oberflächenstruktur der ersten Vorläuferform Vorsprünge **14** auf beiden Oberflächen des Blechs aufweist. Die Vorsprünge **14** weisen vorzugsweise eine Säulenstruktur oder eine Kegelstruktur (nicht gezeigt) auf. Die Säulenstruktur oder die Kegelstruktur kann eine runde oder eine polygonale Basis aufweisen. Vorzugsweise weist die Säulenstruktur eine runde Basis unter Ausbildung einer Zylinderform auf.

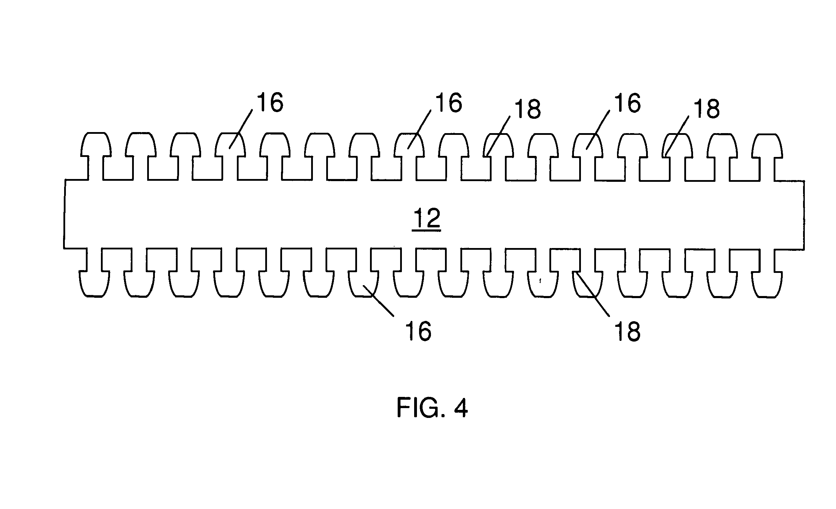

Diese Oberflächenstruktur der ersten Vorläuferform **10** des Metallformkörpers wird im weiteren Verlauf des erfindungsgemäßen Verfahrens in eine Struktur einer weiteren Vorläuferform **12** (siehe **Fig. 4**) des Metallformkörpers umgewandelt, so dass die Vorsprünge **16** an ihrem vom Metallformkörper abgewandten Ende einen Verankerungsabschnitt aufweisen, an dessen Ende, das zur weiteren Vorläuferform des Metallformkörpers weist, ein Hinterschnitt **18** ausgebildet ist. Der Verankerungsabschnitt hat wie abgebildet vorzugsweise eine Pilzform oder eine pilzähnliche Form.

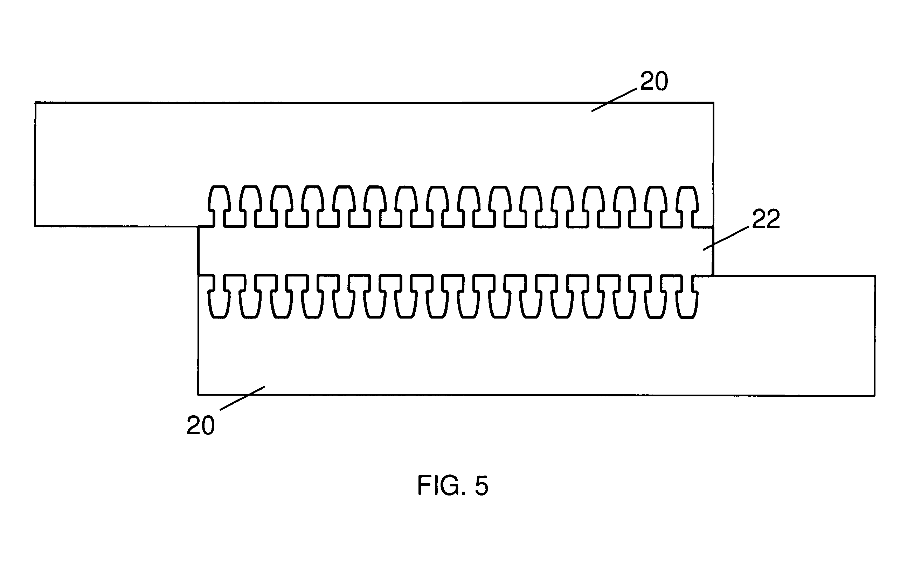

Der daraus hergestellt fertige Metallformkörper **22** (siehe **Fig. 5**) kann als Verbindungselement zwischen zwei Kunststoffplatten oder CFK-Platten **20** dienen, die aus gleichen oder unterschiedlichen Materialien hergestellt sind. Die Verbindung wird vorzugsweise nach einem in der in der EP-Anmeldung 09015014.5 beschriebenen Verfahren erzeugt, auf die hiermit Bezug genommen wird.

Die vorliegende Erfindung wird anhand des nachfolgenden Beispiels erläutert, das die Erfindung nicht einschränken soll. Die ASTM-Norm auf die im Beispiel Bezug genommen wird, ist die ASTM-Norm B 348.

### BEISPIEL

Das Beispiel beschreibt die Herstellung von Formkörpern aus einer Titanlegierung zur Untersuchung mittels Zugversuchen. Das im Beispiel beschriebene Verfahren kann aber auch zur Herstellung der erfindungsgemäßen Metallformkörper angewendet werden, wobei die Verformung im Grünteil- oder Braunteilzustand erfolgt.

Als Ausgangsmaterial wurde gasverdünntes sphärisches Pulver der Zusammensetzung entsprechend des ASTM Grads 23 (TiAl6V4) mit einer Teilchengröße von kleiner als 45 µm (maximale Teilchengröße, ermittelt mittels Sieben) verwendet. Dieses wurde unter Argonatmosphäre mit einem amorphen Borpulver homogen vermengt, das eine Teilchengröße von kleiner als 2 µm aufwies. Die Pulvermischung wurde weiterhin unter Argon-Atmosphäre mit Bindemittelbestandteilen aus Paraffinwachs, Polyethylen-Vinylacetat und Stearinsäure in einem Z-Schaufelkneter bei einer Temperatur von 120°C 2 Stunden lang zu einer homogenen Masse geknetet und anschließend granuliert.

Die so erhaltene granulierte homogene Masse aus Metalllegierungspulver, Zuschlagstoff und Bindemittel wurde auf einer Spritzgießmaschine des Typs Arburg 320S bei einer Massetemperatur von 100°C bis 160°C zu Stäben für Zugversuche verarbeitet. Die so erhaltenen Grünteile wurden in Hexan bei 40°C etwa 10 Stunden lang chemisch entbindert, wobei sich der Wachsanteil des Bindersystems herauslöste.

Die so erhaltenen Braunteile wurden in einen Hochvakuumofen mit keramikfreier Auskleidung und Wolframheizer unter Abdeckungen aus Molybdän platziert, wobei das Volumen so gewählt wurde, dass mindestens 20% des Volumens durch die Braunteile ausgefüllt wurden. Außerhalb der Abdeckungen wurde sauerstoffbindendes Material wie Titanpulver platziert.

In dem Ofen wurde das Braunteil unter Verwendung eines geeigneten Temperaturprogramms zunächst thermisch entbindert, wobei der zersetzte Restbinder mittels einer Vakuumpumpe aus dem Ofenraum entfernt wurde. Zur Sinterung wurde zunächst eine Vakuum von kleiner als 10⁻⁴ mbar (absolut) erzeugt und die Temperatur wurde auf 1350°C erhöht. Die Sinterdauer betrug etwa zwei Stunden.

Die gemessenen mechanischen Eigenschaften der Sinterteile sind in der folgenden Tabelle beispielhaft für die Verwendung von Ti-6Al-4V-0,5B ELI Pulver dargestellt. Verglichen wird mit der Norm ASTM B348-02 für das entsprechende Material als Knetlegierung.

| Legierung | Dehngrenze [MPa] | Zugfestigkeit [MPa] | Dehnung [%] | Dauerfestigkeit [MPa] |
|---|---|---|---|---|
| Ti-6Al-4V-0,5B | 757 | 861 | 14 | 450 |
| Ti-6Al-4V (Grade 23) | 759 | 828 | > 10 | 500* |

| | | | | |
|---|---|---|---|---|
| * α-Lamellen der Breite 12 µm, getemperter Zustand | | | | |

## Patentansprüche

1. Verfahren zur Herstellung von Metallformkörpern mit strukturierter Oberfläche, bei dem
(a) Metallpulver und/oder Metalllegierungspulver mit einem Bindemittel und gegebenenfalls einem Zuschlagstoff in einem Kneter vermischt werden,
(b) die Mischung durch Spritzgießen zu einem Grünteil mit mindestens einem strukturierten Oberflächenabschnitt geformt wird, wobei der strukturierten Oberflächenabschnitt Vorsprünge aufweist,
(c) die mit Vorsprüngen strukturierte Oberfläche des Grünteils so verformt wird, dass die Vorsprünge an ihrem vom Grünteil abgewandten Ende einen Verankerungsabschnitt aufweisen, an dessen zum Grünteil weisenden Ende ein Hinterschnitt ausgebildet ist,
(d) das so erhaltene strukturierte Grünteil chemisch zu einem strukturierten Braunteil entbindert wird,
(e) das chemisch entbinderte, strukturierte Braunteil thermisch entbindert wird,
(f) das chemisch und thermisch entbinderte strukturierte Braunteil zur Bildung eines Metallformkörpers mit strukturierter Oberfläche gesintert wird.

2. Verfahren zur Herstellung von Metallformkörpern mit strukturierter Oberfläche, bei dem
(a) Metallpulver und/oder Metalllegierungspulver mit einem Bindemittel und gegebenenfalls einem Zuschlagstoff in einem Kneter vermischt werden,
(b) die Mischung durch Spritzgießen zu einem Grünteil mit mindestens einer strukturierten Oberfläche geformt wird, wobei die strukturierte Oberfläche Vorsprünge aufweist,
(c) das mit Vorsprüngen strukturierte Grünteil chemisch zu einem mit Vorsprüngen strukturiertem Braunteil entbindert wird,
(d) die mit Vorsprüngen strukturierte Oberfläche des Braunteils so verformt wird, dass die Vorsprünge an ihrem vom Braunteil abgewandten Ende einen Verankerungsabschnitt aufweisen, an dessen zum Braunteil weisenden Ende ein Hinterschnitt ausgebildet ist,
(e) das so erhaltene strukturierte Braunteil thermisch entbindert wird,
(f) das chemisch und thermisch entbinderte strukturierte Braunteil zur Bildung eines Metallformkörpers mit strukturierter Oberfläche gesintert wird.

3. Verfahren nach einem der vorgehenden Ansprüche, **dadurch gekennzeichnet, dass** als Metalllegierungspulver eine Titanlegierung und/oder eine Magnesiumlegierung verwendet wird.

4. Verfahren nach Anspruch 3, **dadurch gekennzeichnet, dass** die Titanlegierung Aluminium und/oder Vanadium als zusätzliche Bestandteile enthält.

5. Verfahren nach Anspruch 4, **dadurch gekennzeichnet, dass** die Titanlegierung 2 bis 10 Gew.-% Aluminium und/oder 2 bis 10 Gew.-% Vanadium auf Basis des Gesamtgewichts der Legierung enthält.

6. Verfahren nach einem der vorgehenden Ansprüche, **dadurch gekennzeichnet, dass** das Bindemittel ausgewählt ist aus der Gruppe bestehend aus Polyamiden, Polyoxymethylen, Polycarbonat, Styrol-Acrylnitril-Copolymerisat, Polyimid, natürlichen Wachsen und Ölen, Duroplasten, Cyanaten, Polypropylen, Polyacetat, Polyethylen, Ethylen-Vinylacetat, Polyvinylalkohol, Polyvinylchlorid, Polystyrol, Polymethylmethacylat, Anilinen, Mineralölen, Wasser, Agar, Glycerin, Polyvinylbutyryl, Polybutylmethacrylat, Cellulose, Ölsäure, Phtalaten, Paraffinwachsen, Carnaubwachs, Ammoniumpolyacrylat, Digylceridstearat und -oleat, Glycerylmonostearat, Isopropyltitanat, Lithiumstrarat, Monoglyceriden, Formaldehyd, Octylsäurephosphat, Olefinsulfonaten, Phosphatestern, Stearinsäure und Mischungen derselben.

7. Verfahren nach einem der vorgehenden Ansprüche, **dadurch gekennzeichnet, dass** der Volumenanteil des Bindemittels am Gemisch weniger als 60% beträgt.

8. Verfahren nach einem der vorgehenden Ansprüche, **dadurch gekennzeichnet, dass** das Spritzgießen bei einer Massetemperatur von 90 bis 180°C erfolgt.

9. Verfahren nach einem der vorgehenden Ansprüche, **dadurch gekennzeichnet, dass** die chemische Entbinderung in einem Pentanbad, Hexanbad oder Heptanbad erfolgt.

10. Verfahren nach einem der vorgehenden Ansprüche, **dadurch gekennzeichnet, dass** die chemische Entbinderung bei einer Temperatur von 10 bis 65°C erfolgt.

11. Verfahren nach einem der vorgehenden Ansprüche, **dadurch gekennzeichnet, dass** die thermische Entbinderung bei einem Druck von 2 bis 20 mbar (200-2000 Pa) erfolgt.

12. Verfahren nach einem der vorgehenden Ansprüche, **dadurch gekennzeichnet, dass** die Sinterung in einer Schutzgasatmosphäre erfolgt.

13. Verfahren nach einem der Ansprüche 1 bis 14, **dadurch gekennzeichnet, dass** die Sinterung im Vakuum erfolgt.

14. Verfahren nach einem der vorgehenden Ansprüche, **dadurch gekennzeichnet, dass** die Verformung des Grünteils oder des Braunteils zur Herstellung einer strukturierten Oberfläche unter Verwendung einer temperierten Matrize stattfindet.

15. Verfahren nach einem der vorgehenden Ansprüche, **dadurch gekennzeichnet, dass** der Oberfläche des Grünlings oder des Braunlings eine Säulenstruktur verliehen wird.

16. Verfahren nach einem der vorgehenden Ansprüche, **dadurch gekennzeichnet, dass** die Oberfläche des Metallformkörpers nach dem Sintern eine Pilzstruktur aufweist.

## Claims

1. Process for producing shaped metal bodies having a structured surface, wherein
(a) metal powder and/or metal alloy powder is mixed with a binder and optionally a further component in a kneader,
(b) the mixture is shaped by injection moulding to give a green part having at least one structured surface section, with the structured surface section having projections,
(c) the surface structured with projections of the green part is deformed in such a way that the projections have an anchoring section at their end facing away from the green part, with an undercut being formed at the end of the anchoring section facing the green part,
(d) the structured green part obtained in this way is subjected to chemical binder removal to give a structured brown part,
(e) the structured brown part which has been subjected to chemical binder removal is subjected to thermal binder removal,
(f) the structured brown part which has been subjected to chemical and thermal binder removal is sintered to form a shaped metal body having a structured surface.

2. Process for producing shaped metal bodies having a structured surface, wherein
(a) metal powder and/or metal alloy powder is mixed with a binder and optionally a further component in a kneader,
(b) the mixture is shaped by injection moulding to give a green part having at least one structured surface, with the structured surface having projections,
(c) the green part structured with projections is subjected to chemical binder removal to give a brown part structured with projections,
(d) the surface structured with projections of the brown part is deformed in such a way that the projections have an anchoring section at their end facing away from the brown part, with an undercut being formed at the end of the anchoring section facing the brown part,
(e) the structured brown part obtained in this way is subjected to thermal binder removal,
(f) the structured brown part which has been subjected to chemical and thermal binder removal is sintered to form a shaped metal body having a structured surface.

3. Process according to either of the preceding claims, **characterized in that** a titanium alloy and/or a magnesium alloy is used as metal alloy powder.

4. Process according to Claim 3, **characterized in that** the titanium alloy contains aluminium and/or vanadium as additional constituents.

5. Process according to Claim 4, **characterized in that** the titanium alloy contains from 2 to 10% by weight of aluminium and/or from 2 to 10% by weight of vanadium, based on the total weight of the alloy.

6. Process according to any of the preceding claims, **characterized in that** the binder is selected from the group consisting of polyamides, polyoxymethylene, polycarbonate, styrene-acrylonitrile copolymer, polyimide, natural waxes and oils, thermosets, cyanates, polypropylene, polyacetate, polyethylene, ethylene-vinyl acetate, polyvinyl alcohol, polyvinyl chloride, polystyrene, polymethyl methacrylate, anilines, mineral oils, water, agar, glycerol, polyvinylbutyryl, polybutyl methacrylate, cellulose, oleic acid, phthalates, paraffin waxes, carnauba wax, ammonium polyacrylate, digylceride stearate and oleate, glyceryl monostearate, isopropyl titanate, lithium stearate, monoglycerides, formaldehyde, octyl phosphate, olefin sulphonates, phosphate esters, stearic acid and mixtures thereof.

7. Process according to any of the preceding claims, **characterized in that** the proportion by volume of the binder in the mixture is less than 60%.

8. Process according to any of the preceding claims, **characterized in that** the injection moulding is carried out at a melt temperature of from 90 to 180°C.

9. Process according to any of the preceding claims, **characterized in that** the chemical binder removal is carried out in a pentane bath, hexane bath or heptane bath.

10. Process according to any of the preceding claims, **characterized in that** the chemical binder removal is carried out at a temperature of from 10 to 65°C.

11. Process according to any of the preceding claims, **characterized in that** the thermal binder removal is carried out at a pressure of from 2 to 20 mbar (200-2000 Pa).

12. Process according to any of the preceding claims, **characterized in that** sintering is carried out in a protective gas atmosphere.

13. Process according to any of Claims 1 to 14, **characterized in that** sintering is carried out under reduced pressure.

14. Process according to any of the preceding claims, **characterized in that** the deformation of the green part or of the brown part to produce a structured surface takes place using a heated die.

15. Process according to any of the preceding claims, **characterized in that** the surface of the green body or of the brown body is given a column structure.

16. Process according to any of the preceding claims, **characterized in that** the surface of the shaped metal body after sintering has a mushroom structure.

## Revendications

1. Procédé de fabrication de corps de forme métalliques dotés d'une surface structurée, dans lequel
(a) de la poudre de métal et/ou de la poudre d'alliage métallique sont mélangées dans une machine de malaxage avec un liant et le cas échéant avec une substance additionnelle,
(b) le mélange est mis en forme par injection pour réaliser une ébauche comportant au moins une partie superficielle structurée, la partie superficielle structurée comportant des saillies,
(c) la surface structurée comportant des saillies de l'ébauche est déformée de façon telle que les saillies présentent à leur extrémité située à l'opposé de l'ébauche une partie d'ancrage à l'extrémité orientée vers l'ébauche de laquelle est formée une contre-dépouille,
(d) l'ébauche structurée obtenue est débarrassée chimiquement du liant en vue de sa transformation en une pièce inachevée structurée,
(e) la pièce inachevée structurée, débarrassée chimiquement du liant est débarrassée thermiquement du liant,
(f) la pièce débarrassée chimiquement et thermiquement du liant est frittée en vue de la formation d'un corps de forme métallique doté d'une surface structurée.

2. Procédé de fabrication de corps de forme métalliques dotés d'une surface structurée, dans lequel
(a) de la poudre de métal et/ou de la poudre d'alliage métallique sont mélangées dans une machine de malaxage avec un liant et le cas échéant avec une substance additionnelle,
(b) le mélange est mis par injection en forme d'ébauche comportant au moins une surface structurée, la surface structurée présentant des saillies,
(c) l'ébauche structurée comportant des saillies est débarrassée chimiquement du liant en devenant une pièce inachevée structurée comportant des saillies,
(d) la surface structurée de la pièce inachevée comportant des saillies est déformée de façon telle que les saillies présentent une partie d'ancrage à leur extrémité située à l'opposé de la pièce inachevée à l'extrémité orientée vers la pièce inachevée de laquelle est formée une contre-dépouille,
(e) la pièce inachevée structurée ainsi obtenue est débarrassée thermiquement du liant,
(f) la pièce inachevée structurée débarrassée du liant chimiquement et thermiquement est frittée en vue de la réalisation d'un corps de forme métallique doté d'une surface structurée.

3. Procédé selon l'une des revendications qui précèdent **caractérisé en ce que** l'on utilise en tant que poudre d'alliage métallique un alliage de titane et/ou un alliage de magnésium.

4. Procédé selon la revendication 3 **caractérisé en ce que** l'alliage de titane contient de l'aluminium et/ou du vanadium en tant que parties constitutives additionnelles.

5. Procédé selon la revendication 3 **caractérisé en ce que** l'alliage de titane contient de 2 à 10 % en poids d'aluminium et/ou de 2 à 10 % en poids de vanadium par rapport au poids total de l'alliage.

6. Procédé selon une des revendications qui précèdent **caractérisé en ce que** le liant est choisi dans le groupe constitué des polyamides, du polyoxyméthylène, du polycarbonate, de copolymère styrène-acrylonitrile, de polyimide, de cires et d'huiles naturelles, de matières thermodurcissables, de cyanates, du polypropylène, du polyacétate, du polyéthylène, de l'acétate d'éthylène-vinyle, de l'alcool polyvinylique, du poly(chlorure de vinyle), du polystyrène, du poly(méthacrylate de méthyle), d'anilines, d'huiles minérales, d'eau, d'agar-agar, de glycérine, du poly(butyryle de vinyle, du poly(méthacrylate de butyle), de cellulose, d'acide oléique, de phtalates, de cires de paraffine, de cires de carnauba, de poly(acrylate d'ammonium), de stéarate de diglycéride et d'oléate de diglycéride, de monostéarate de glycéryle, du titanate d'esoprolyle, de stéarate de lithium, de monoglycérides, de formaldéhyde, de phosphate d'oxalyle, de sulfonates d'oléfines, d'esters phosphate, d'acide stéarique et de mélanges de ceux-ci.

7. Procédé selon une des revendications qui précèdent **caractérisé en ce que** la proportion en volume du liant dans le mélange est inférieure à 60 %.

8. Procédé selon une des revendications qui précèdent **caractérisé en ce que** l'injection est effectuée à une température dans la masse de 90°C à 180°C.

9. Procédé selon une des revendications qui précèdent **caractérisé en ce que** le dégagement chimique du liant s'effectue dans un bain de pentane, dans un bain d'hexane ou dans un bain d'heptane.

10. Procédé selon une des revendications qui précèdent **caractérisé en ce que** le dégagement chimique du liant s'effectue à une température comprise entre 10°C et 65°C.

11. Procédé selon une des revendications qui précèdent **caractérisé en ce que** le dégagement thermique du liant s'effectue sous une pression comprise entre 2 mbars et 20 mbars (entre 200 et 2000 Pas).

12. Procédé selon une des revendications qui précèdent **caractérisé en ce que** le frittage est effectué dans une atmosphère de gaz de protection.

13. Procédé selon une des revendications 1 à 14 **caractérisé en ce que** le frittage est effectué sous vide.

14. Procédé selon une des revendications qui précèdent **caractérisé en ce que** la déformation de l'ébauche ou de la pièce inachevée en vue de réaliser une surface structurée, est effectuée en utilisant une matrice mise en équilibre de température.

15. Procédé selon une des revendications qui précèdent **caractérisé en ce qu'**on confère à la surface de l'ébauche ou de la pièce inachevée une structure de colonnes.

16. Procédé selon un des revendications qui précèdent **caractérisé en ce que** la surface du corps de forme présente, après le frittage, une structure du type champignon.
